# EUROPEAN PATENT SPECIFICATION

(11) **EP 1 517 247 B1**
(45) Date of publication and mention of the grant of the patent: **15.11.2006**
(21) Application number: 03021327.6
(22) Date of filing: 19.09.2003
(51) Int. Cl.: G06F 13/38, G06F 13/40, G06F 3/06

(54) **Data transfer interface**
Datenübertragungsschnittstelle
Interface de transmission de données

(43) Date of publication of application: 23.03.2005
(73) Proprietor: Harman Becker Automotive Systems GmbH, 76307 Karlsbad (DE)
(72) Inventor: Urban, Volker, 78056 Villingen-Schwenningen (DE); Weisser, Pirmin, D-78052 Villingen-Schwenningen (DE)
(74) Representative: Grünecker, Kinkeldey, Stockmair & Schwanhäusser Anwaltssozietät

(56) References cited:
- US-A- 5 446 877
- US-A- 5 898 891
- US-B1- 6 301 625

## Description

The present invention relates to an interface and a method for interconnecting data storage drives and a control device. In particular, the present invention relates to a data transfer interface for transferring data from/to interconnected data storage drives.

Data interfaces allow a host device, like a computer system, to send and receive information for data storage devices such as hard disk drives or optical data storage media. For connecting such peripheral devices to the host, the ATA (AT-Attachment) bus of the original IBM/AT PC is still widely in use. The ATA bus standard has been extended with the AT Attachment Packet Interface (ATAPI) and is since then named ATA/ATAPI. The ATA/ATAPI is an interface extension that supports connection of external devices to computer systems, in particular, to personal computers.

The ATA/ATAPI standard defines a set of registers used by the peripheral devices and host computer to effect the transfer of data. This set of registers is named task file. Peripheral devices require device-specific control information such as a sector, a cylinder number or a head ID to search for position information of a read/write head. This information is individually transferred and written into a register of the peripheral device.

US-B1-6 301 625 discloses a PC-based disk array system which comprises an array controller which controls an array of ATA disk drives. The array controller and the disk drive controllers are jointly connected to a packet switch bus.

A communication session with a peripheral device using ATA/ATAPI proceeds through several phases. The host computer writes a command to a command register on the ATA/ATAPI peripheral during a command phase. Thereafter, a data phase is entered in which the data is transferred from/to the peripheral device.

US-A-6 119 183 describes a switching system simulating two SCSI ports for connecting a SCSI device having only one port. It is suggested to enhance the transmission reliability by using a differential SCSI interface, comprising a pair of wires having complementary polarities.

When copying data between two peripheral devices connected to a host, the data is first read from one of the peripheral devices, transferred to the host and, finally, transferred and written to the second peripheral device. Such a processing is time consuming, in particular when copying large amounts of data.

In view of this prior art drawback, it is desirable to provide a data transfer interface and a method for transferring data between data storage drives enabling a more efficient use thereof.

This is achieved by the features of the independent claims.

According to a first aspect of the present invention, a data transfer interface for interconnecting two data storage drives and a control device is provided. The data transfer interface comprises a plurality of data lines jointly connecting both data storage drives and the control device. The data transfer interface further comprising a plurality of control data lines jointly connecting both data storage drives and the control device. Further, data transfer interface comprises a first read/write command line connecting one of the data storage drives and the control device. In addition, the data transfer interface comprises a second read/write command line connecting the other of the data storage drives to the control device.

According to another aspect of the present invention, a computer system is provided having a connector connectable to data storage drives. The connector comprises a plurality of data lines, a plurality of control data lines and a first read/write command line. Said first read/write command line being connectable to one of said data storage. drives. In addition, a second read/write command line is provided being connectable to a second one of said data storage drives.

According to a further aspect of the present invention, a method for connecting two data storage drives and a control device is provided. The control device initialises both connected data storage drives for preparing a data read and/or write procedure by sequentially selecting one of both connected data storage drives and assigning respective data storage areas thereon. Data are transferred to/from said data storage drives in accordance with the assigned data storage areas by concurrently instructing both data storage drives by individual read/write commands.

It is the particular approach of the present invention to enable an individual control of two data storage drives which are jointly connected to a control device. While data lines and control lines are jointly connected to the two data storage drives, separate read/write lines enable an individual control of both connected data storage drives.

By duplicating the read/write lines, each of the data storage drives can be accessed individually. In this manner, both connected data storage drives may be configured to directly transfer data in-between. This is accomplished by instructing one data storage drive to read data and the other data storage drive to write data while the data is directly transferred without any intermediate data buffering in the control device or host. Consequently, a data copy procedure can be accelerated considerably.

The provision of an additional read/write line enables an individual initialisation of both drives, meaning that data storage areas on both drives are individually selectable. Thus, in an alternative application the data transfer interface of the present invention enables a copy of data from a control device simultaneously to two different data storage drives.

Preferably, the data transfer is controlled by the control device such that data signals and control signals are jointly output to both connected data storage drives while read/write signals are individually output to each of the connected drives. In this manner, only a minimum adaptation effort is required in order to use a single set of data lines and control lines to independently control the operation of separate data storage drives.

Preferably, each read/write line comprises separate lines for transferring a read command and for transferring a write command.

Preferably, the data lines, the control lines and the first read/write command lines are configured in accordance with the ATA/ATAPI standard. By the provision of one additional read/write command line, the connected drives can be controlled individually such that an accelerated data copying can be achieved.

Preferably, one of the drives is an optical disk drive and the other drive is a hard disk drive. For such a data storage drive configuration, data from the optical disk drive can be transferred in a simple and fast manner to the hard disk drive.

The present invention enables a transfer of a large amount of data within a short period of time. In this manner, software updates, operation data like navigation data, multimedia data like video and audio, and other data can be transferred from an optical storage medium for later use to a re-writable storage medium like a hard disk drive. When the data from the hard disk drive is employed during operation, for instance for navigation purposes, the optical disk drive can be used at the same time for a reading/writing of other data.

Preferably, the data storage drives are controlled by setting registers provided in each of the data storage drives, respectively.

Further preferred embodiments of the present invention are the subject matter of dependent claims.

Additional features and advantages of the present invention will become apparent from the following description of the invention as illustrated in the drawings, wherein:
- Fig. 1: schematically illustrates a prior art single channel data interface jointly connecting two data storage drives to a host device;
- Fig. 2: schematically illustrates a double channel prior art data interface for individually connecting two data storage drives to a host device;
- Fig. 3: schematically illustrates a data transfer interface in accordance with the present invention;
- Fig. 4: illustrates in a block diagram form the configuration of task file registers provided in the data storage drives connected to the data transfer interface in accordance with the present invention;
- Fig. 5: schematically illustrates the register configuration in accordance with the single channel data interface approach;
- Fig. 6: schematically illustrates the register configuration of a data transfer interface in accordance with the present invention; and
- Fig. 7: is a flow chart illustrating the steps performed in accordance with the present invention for concurrently transferring data from/to the data storage drives.

The illustrated embodiments of the present invention will now be described with reference to the drawings.

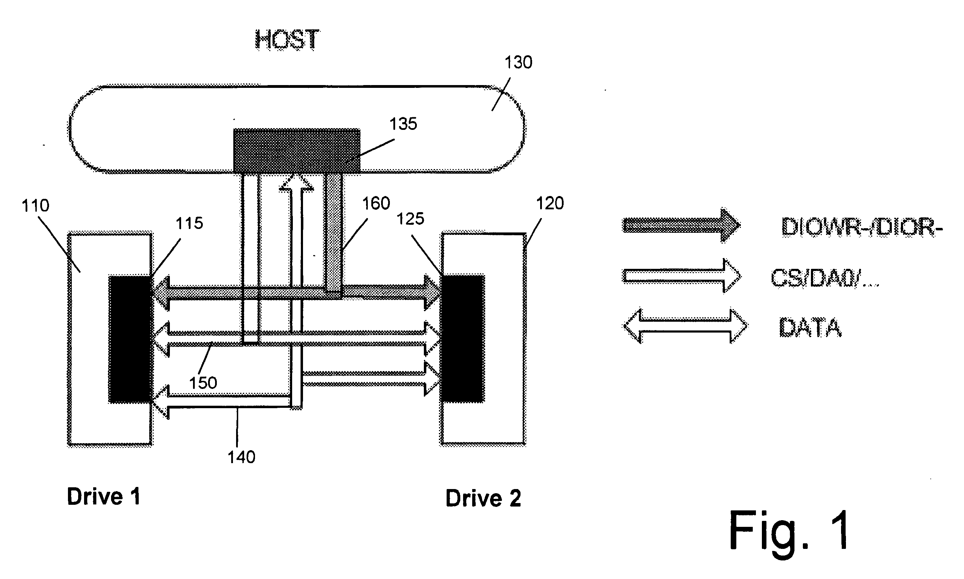

Referring to Fig. 1, a prior art single channel data transfer interface is illustrated connecting two data storage drives 110, 120. Each of the data storage drives 110, 120 is provided with a respective data connector 115, 125. Both data storage drives 110 and 120 share a single host interface 135 provided at a host or control device 130. A plurality of data lines 140, a plurality of control lines 150 and a read/write line 160 are jointly connected to both data storage drives 110, 120. By selecting a particular identifier bit in a drive/head register provided in each of the data storage drives 110, 120, one of the data storage drives 110, 120 is selected for carrying out a read or write operation.

In accordance therewith, only a single one of both data storage drives can be selected at a time and perform a read or write operation. For copying data between both data storage drives, the data needs to be read and transferred from a first one of the data storage drives 110 to the host 130, to be buffered therein and to be subsequently transferred from the host 130 to the second data storage drive 120. The total transfer time for copying data between both data storage drives 110, 120 is represented by the accumulated time period for reading and transferring data from the first data storage drive to the host, for buffering the read data in the host and for transferring and writing data from the host onto the second data storage drive.

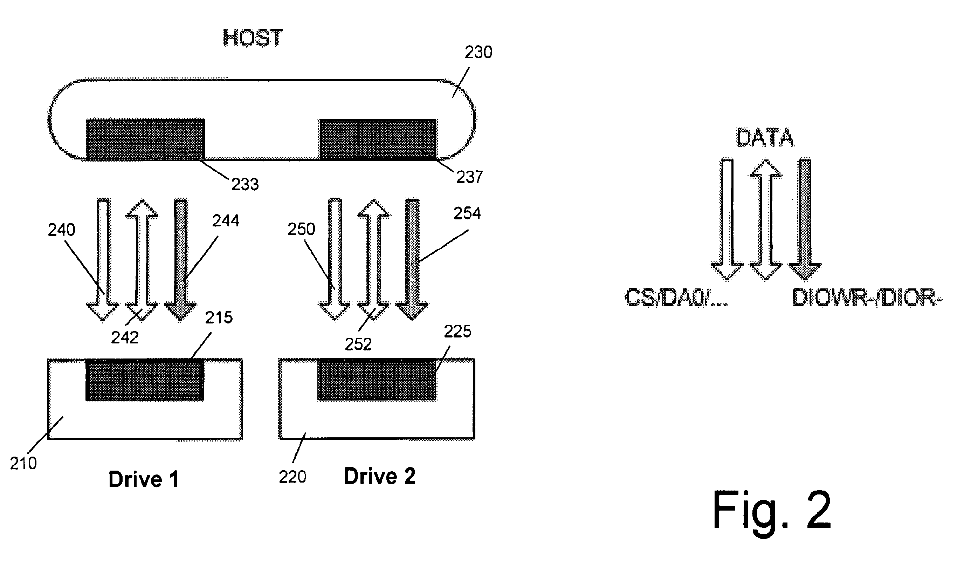

Referring to Fig. 2, the double channel data transfer interface approach is illustrated. Both data storage drives 210, 220 are connected to the host 230 by individual data transfer interfaces. For each of the data transfer interfaces, respective data connectors 215, 233 and 225, 237 are provided to link the data storage drives to the host and to enable an individual operation of both data storage drives 210, 220. The host can prepare a data transfer between both data storage drives 210, 220 by individually initialising both data storage drives and transferring the data in-between through the host.

While the prior approach illustrated in Fig. 1 results in a prolonged data transfer time for copying data between both data storage drives, the approach illustrated in Fig. 2 requires an increased hardware effort.

The present invention aims to reduce the data processing time required in accordance with the approach of Fig. 1 and to reduce the hardware effort as required by the approach shown in Fig. 2.

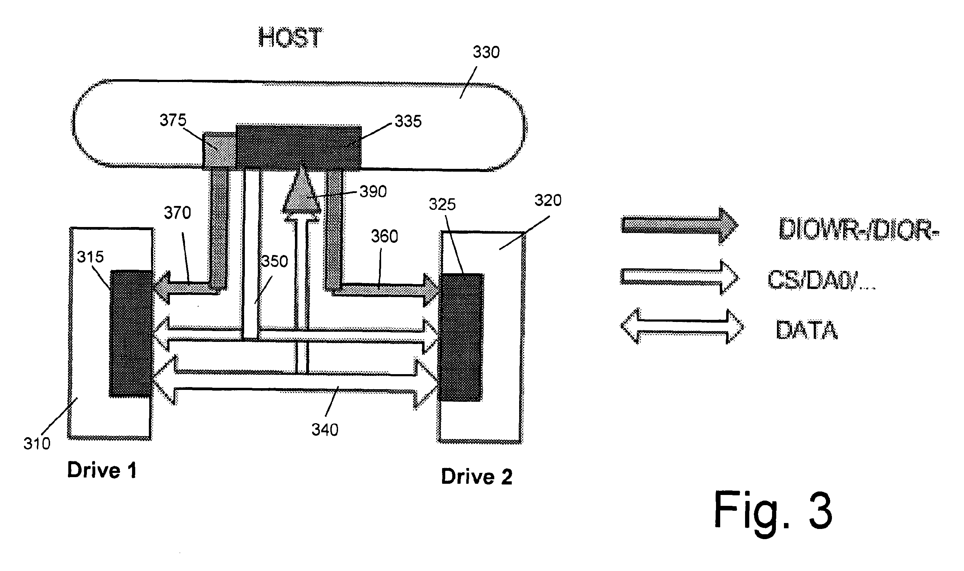

Fig. 3 illustrates a data transfer interface configured in accordance with the present invention. Both data storage drives 310, 320 are equipped with respective data connectors 315, 325 for establishing connection to a host 330 by connector 335. The data lines 340 and the control lines 350 of both data storage drives 310, 320 are jointly connected to the host 330. In contrast to the prior art approach as described, for instance, in connection with Fig. 1, read/write lines 360, 370 are individually provided for each of the data storage drives 310, 320. In accordance therewith, the host 330 is additionally equipped with a connector 375 for the supplementary read/write line 370.

The provision of individual read/write lines 360, 370 enables a particular selection of one of the data storage drives 310, 320 for operation. In this manner, both data storage drives can be initialised separately, in particular different data storage areas can be defined and different read/write commands outputted to instruct the operation of both data storage drives. Consequently, a direct data transfer can be accomplished such that one of the drives is reading data from a predefined data storage portion while the second drive is writing the received data to a designated storage portion.

In this manner, huge amounts of data can be transferred in a short period of time from a first storage drive, e.g. a DVD drive, to a second data storage drive, for instance a hard disk drive.

Such data transfer interfaces can be advantageously used in vehicle entertainment and information systems. Such systems require, for instance, a repetitive update of navigation information. When a vehicle entertainment and information system only comprises a single DVD drive, a time consuming update procedure blocks the use of the DVD drive for other applications, such as a DVD or CD reproduction operation of audio and/or video data. By employing a data transfer interface in accordance with the present invention, the update information can be transferred efficiently and the time needed is reduced considerably.

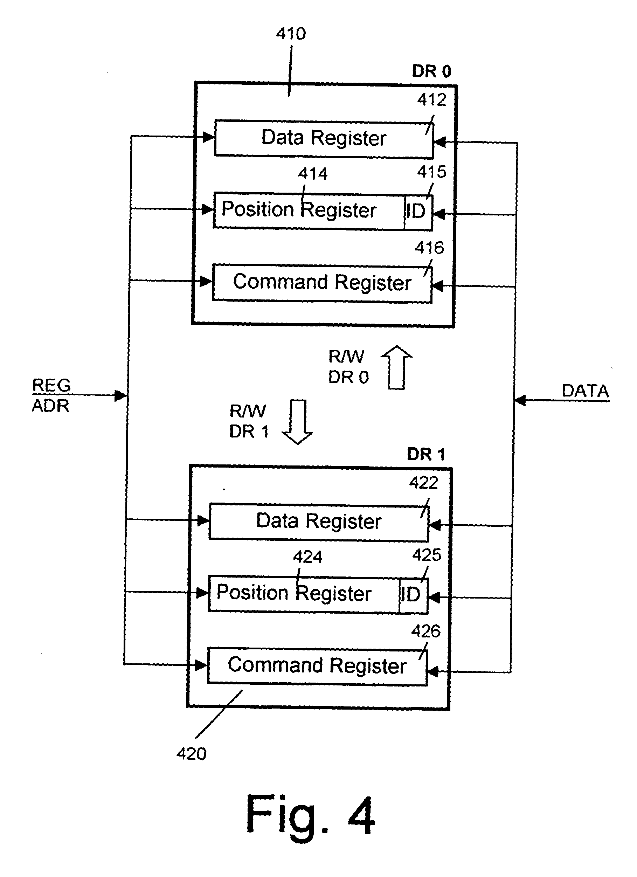

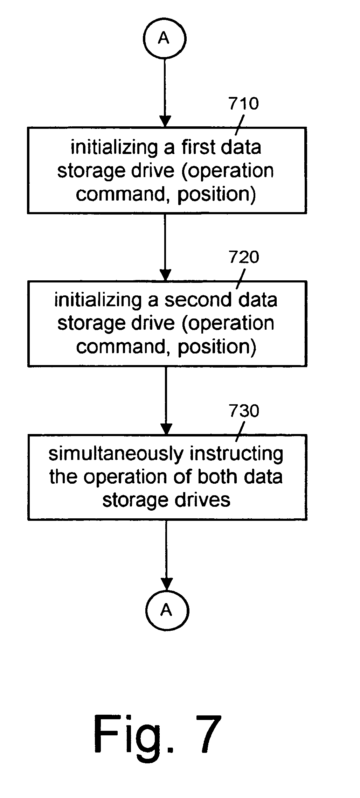

In accordance with the ATA/ATAPI standard, each data storage drive comprises a set of registers named AT task file representing a communication interface between the host device and a data storage drive for transferring control data and instructing the operation of the data storage drive. The control of the connected data storage drive by means of task file registers is described in more detail in connection with figures 4 to 7.

The host or control device sends instructions to a task file 410, 420 provided in each of the data storage drives 310, 320. Each task file comprises a data register 412, 422, a position register 414, 424 and a command register 416, 426. Other registers may also be provided.

The task file 410, 420 of both data storage drives 310, 320 are jointly connected to control lines (as register address lines) on the one hand and to data lines on the other hand. While the control lines select a particular register from all registers provided within the task file 410, 420, the data lines provide the data to be written into the selected register.

For data transfers, a data storage area to be used for a data read or write operation is first selected. For this purpose, a position information is transferred to the position register 414, 424 for positioning of the read/write head in order to command the data storage drive's servomotor to move the head to the desired position.

Next, the desired read or write operation to be performed by the data storage drive during the data transfer is written into the respective command registers 416, 426 in accordance with data transferred on the control lines and data lines.

During a data read or write operation from/onto the data storage medium, the outputted or received data are written into the respective data register 412, 422 of the data storage drives 310, 320.

In order to be able to individually initialise each task file 410, 420 of both connected data storage drives, the read/write lines are provided separately for each of the drives. Only the provision of individual read/write lines enables a transfer of control data for selecting a particular register and data to be written therein for a single one of the two data storage drives. That data storage drive will write the initialisation data provided on the data and control lines into its task file register which has a write command applied on its read/write line.

Preferably, the read/write lines interconnecting the host and the data storage drive consists of two lines, including one line for providing a read command and another line for providing a write command.

In this manner, the data transfer interface enables a direct data transfer from the data register 412 of one of the data storage drives 410 to the data register 422 of the other data storage drive 420, i.e. the target data storage drive. The data transfer interface of the present invention avoids any further data transfer or buffering operations.

Both data storage drives share control (address) lines and data lines from the host interface. The data lines at the host interface may be switched to high impedance. As only one additional read line (DIOR) and write line (DIOWR) needs to be added, the data transfer interface only requires a small amount of additional hardware. For a copy of data between both interconnected data storage drives, both drives are first initialised sequentially while the reading of the data register of the source data storage drive is effected at the same time of writing new data into the data register of the target data storage drive. A buffering of data is not required.

While conventionally the data are transferred through the host between both data storage drives, the present invention enables a direct data transfer between the interconnected data storage drives. Thus, the processing power of the host is released for other operations during the direct data transfer phase as only a reduced hardware effort and processing load is required during this stage.

In addition to a direct data transfer between both interconnected data storage drives, both drives may be operated to simultaneously store identical data thereon. This is advantageously employed for back-up procedures or a computer RAID procedure. The term RAID is designating a Redundant Array of Inexpensive Disks. A RAID includes a number of data storage drives which act as an extremely reliable single disk drive. By employing the data transfer interface of the present invention, the data to be stored can be duplicated in a simple manner.

The data transfer interface can be connected to all peripheral devices equipped with a standardized connector. In particular, the data storage drives of the present invention can be optical disk drives, hard disk drives, floppy disk drives, flash memories and silicon drives. The types of peripheral devices connectable to the data transfer interface of the present invention is not limited to the explicitly mentioned data storage means. There exists a plurality of other kinds of peripheral devices connectable thereto.

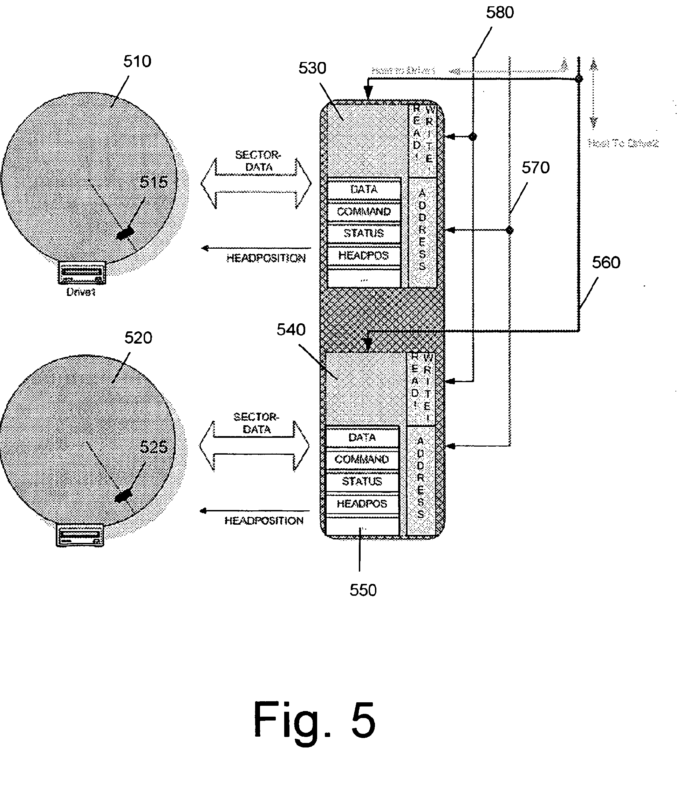

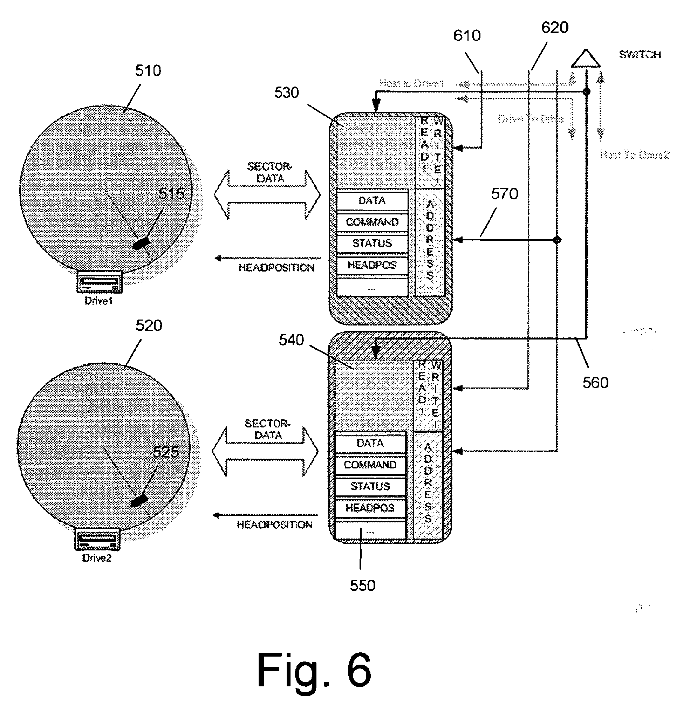

Fig. 5 and Fig. 6 illustrate the task file registers of the data storage drives together with the connected data lines in more detail. While Fig. 5 illustrates the configuration in accordance with the prior art single channel approach (cf. Fig 1), Fig. 6 represents a configuration in accordance with the present invention.

Both data storage drives are denoted by reference numerals 510, 520. Each drive has a read/write head 515, 525 for reading and writing data from/on a data storage medium incorporated therein. Respective task file registers 530, 540 are provided in each of the storage drives. Each task file register 530, 540 comprises a plurality of registers 550 as previously described in connection with Fig. 4.

Both task file registers 530, 540 share common data lines 560 and control lines 570. While the task file registers shown in Fig. 5 also share a common read/write line 580, the task file registers shown in Fig 6 are provided with individual read/write lines 610, 620. The provision of individual read/write lines ensures that both task file registers 530, 540 can be controlled individually and each of the data storage drives can be initialised irrespective of the status of the other data storage drive.

When directly copying data between a data sector of a first data storage drive to a data sector of the second data storage drive, the following steps are performed. First, it is checked whether or not the first data storage drive is an inoperative state. Next, the initialisation parameters are written into the task file register of the first data storage drive, in particular the head position is written into the "HEADPOS" register and the "COMMAND" register is set to a read operation.

After the initialisation procedure 710 for the first data storage drive is completed, the same procedure is performed for the second data storage drive, meaning that the data storage area is defined in the "HEADPOS" register while a write command is set in the "COMMAND" register (step 720).

After both initialisation procedures 710, 720 for the data storage drives are completed, the first data storage drive is instructed to read data while the second data storage drive is instructed to write data (step 730).

When the first data storage drive provides read data and the second data storage drive requests for data to be written (these states are preferable indicated by the "STATUS" registers shown in Fig. 6), the data lines are separated from the host and a direct data transfer for simultaneously performing a read access to the data register of data storage drive 1 and a write access to the data register of data storage drive 2 is carried out.

According to a preferred embodiment, data lines 340 may be disconnected from the host 330 in Fig. 3 when directly transferring data between both data storage devices 310, 320 is accomplished by the additional provision of a switch means 390. According to a particular implementation, the switch means 390 is a tri-state driver. Tri-state driver 390 connects/disconnects the host branch of the data lines 340 to/from the host 330.

In contrast thereto, the prior art approach as shown in Fig. 5 is controlled such that all data storage drives connected to the host are always set in accordance with the initialisation data. A drive selection is only effected during transmission of the read or write operation command which is accompanied by an identifier. The identifier being an identification bit is denoted by reference numerals 415, 425 in Fig. 4. Only when the transmitted identifier matches a previously stored identification value in the respective drive, the drive will perform the operation as instructed by the initialisation data. Thus, the prior art interface does not allow to operate both drives at the same time.

In accordance with the ATA/ATAPI standard, the data lines 340 comprise 16 individual lines in parallel, while the data control lines 350 are composed of 3 address lines. Further, there are two additional lines CS0 and CS1 which also serve for addressing purposes in the data transfer interface. The read/write command line 360 is composed of two individual lines, a first one for the transmission of a read command and a second one for the transmission of a write command. The additional read/write line 370 is configured accordingly. Thus, the data transfer interface of the present invention can be connected to all peripheral devices having a standardized data connector.

Although the previous description only relates to a connection of two data storage drives to a host device, the present invention is not limited thereto. As it is obvious for a skilled person, additional data storage drives can be connected in an identical manner, i.e. by providing additional read/write lines for individually controlling an initialisation procedure thereof. The data transfer interface of the present invention can thus copy data between any subset of two data storage drives from all of the interconnected data storage drives.

In summary, the present invention provides a data transfer interface which individually sets the control parameters for both data storage drives. In this manner, a direct data transfer between both data storage drives can be accomplished and accelerated copy of data achieved.

## Claims

1. A data transfer interface for interconnecting two data storage drives (310, 320) and a control device (330), comprising:
a plurality of data lines (340) jointly connecting both data storage drives (310, 320) and said control device (330),
a plurality of control data lines (350) jointly connecting both data storage drives (310, 320) and said control device (330), and
a first read/write command line (360) connecting one of said data storage drives (320) and said control device (330)
**characterized by**
a second read/write command line (370) connecting the other of said data storage drives (310) and said control device (330).

2. A data transfer interface according to claim 1, wherein said control device (330) controlling a direct data transfer between both interconnected data storage drives (310, 320).

3. A data transfer interface according to claim 1, wherein said control device (330) transferring data from said control device (330) to both data storage drives (310, 320) to be simultaneously written thereon.

4. A data transfer interface according to any of claims 1 to 3, wherein said control device (330) controlling the transfer of data by jointly outputting signals on said data lines (340) and said control lines (350) to said connected storage drives (310, 320) and by individually outputting read/write signals on said read/write command lines (360, 370) to said connected storage drives (310, 320).

5. A data transfer interface according to claim 4, wherein said control device (330) being adapted to control the transfer of data by sequentially outputting said read/write signals to said connected data storage drives (310, 320) in order to initialize the data storage drives (310, 320) for data transfer, and by concurrently outputting said read/write signals to both data storage drives (310, 320) in order to perform a data transfer.

6. A data transfer interface according to claim 5, wherein said control device (330) initializing the transfer of data by sequentially outputting read/write control signals on said read/write command lines (360, 370) in order to select one of said connected data storage drives (310, 320) in order to assign a certain data storage area on said selected data storage drive (310, 320) for a reading or writing of data.

7. A data transfer interface according to any of claims 4 to 6, wherein said control device (330) instructing both connected data storage devices (310, 320) to directly transfer data by concurrently outputting a read control signal on said first or said second read/write command line (360, 370) and a write control signal on the other read/write command line (360, 370).

8. A data transfer interface according to any of claims 4 to 6, wherein said control device (330) instructing both connected data storage devices (310, 320) to write data thereon by concurrently outputting a write control signal on said first and said second read/write command lines (360, 370).

9. A data transfer interface according to any of claims 1 to 8, wherein each of said read/write command lines (360, 370) includes a read command line for outputting a read command and a write command line for outputting a write command.

10. A data transfer interface according to any of claims 1 to 9, wherein said data lines (340) include 16 lines.

11. A data transfer interface according to any of claims 1 to 10, wherein said data lines (340), said control lines (350) and said first read/write command line (360) are configured in accordance with the ATA/ATAPI standard.

12. A data transfer interface according to any of claims 1 to 11, wherein said data storage drives (310, 320) are optical disk drives, hard disk drives or an optical disk drive and a hard disk drive.

13. A data transfer interface according to any of claims 2 to 12, further comprising a switch means (390) for disconnecting the data lines (340) from the control device (330) during direct data transfer between both connected data storage drives (310, 320).

14. A vehicle information and/or entertainment system including a data transfer interface in accordance with any of claims 1 to 13.

15. A vehicle information and/or entertainment system according to claim 14, wherein video, audio, navigation or other data are transferred from a first data storage drive (310, 320) being an optical disk drive to a second data storage drive (310, 320) being a hard disk drive.

16. A processing system including a data transfer interface in accordance with any of claims 1 to 13.

17. A computer system having a connector (335) connectable to a data transfer interface, said connector (335) comprising:
a plurality of data lins (340),
a plurality of control data lines (350), and
a first read/write command line (370) for transmitting a read/write command to a storage drive (310)
**characterized by**
a second read/write command line (360) for transmitting a read/write command to another storage drive (320).

18. A computer system according to claim 17, wherein each of said read/write command lines includes a read command line for a read command and a write command line for a write command.

19. A computer system according to claim 17 or 18, wherein said data lines include 16 lines.

20. A computer system according to any of claims 17 to 19, wherein said data lines, said control lines and said first read/write command line are configured in accordance with the ATA/ATAPI standard.

21. A method for connecting two data storage drives (310, 320) and a control device (330), said method comprising the steps of:
initializing (710, 720) both connected data storage drives (310, 320) by said control device (330) for preparing a data read and/or write procedure by sequentially selecting one of both connected data storage drives (310, 320) and assigning respective data storage areas thereon, and
transferring data to/from said data storage drives (310, 320) in accordance with the assigned data storage areas by concurrently instructing (730) both data storage drives (310, 320) by individual read/write commands.

22. A method according to claim 21, wherein both data storage drives (310, 320) being jointly connected to said control device (330) for controlling said data transfer by a plurality of data lines (340) and a plurality of control lines (350) and both data storage drives (310, 320) being individually connected to said control device (330) by a respective read/write command line (360, 370).

23. A method according to claim 22, wherein each of said read/write command lines (360, 370) includes a read command line for outputting a read command and a write command line for outputting a write command.

24. A method according to any of claims 21 to 23, wherein data are directly transferred from one of said data storage drives (310, 320) to the other data storage drive (310, 320) by concurrently instructing (730) one of the data storage drives (310, 320) to read data from the assigned data storage area and by instructing (730) the other data storage drive (310, 320) to write data to the assigned data storage area.

25. A method according to claim 24, further comprising the step of disconnecting the data lines (340) from the control device (330) when directly transferring data between both connected data storage devices (310, 320).

26. A method according to any of claims 21 to 23, wherein data are simultaneously transferred to both of said data storage drives (310, 320) by concurrently instructing (730) both data storage drives (310, 320) to write data to the respectively assigned data storage areas.

27. A method according to any of claims 21 to 26, wherein said control lines (360, 370) include 3 address lines for selecting one of a plurality of registers (412-426) in a connected data storage drive (310, 320).

28. A method according to any of claims 21 to 27, wherein method being in accordance with said ATA/ATAPI standard.

## Patentansprüche

1. Datenübertragungsschnittstelle zur Verbindung von zwei Datenspeicherlaufwerken (310, 320) und einer Steuervorrichtung (330) umfassend:
eine Mehrzahl von Datenleitungen (340), die die beiden Datenspeicherlaufwerke (310, 320) und die Steuervorrichtung (330) miteinander verbinden,
eine Mehrzahl von Steuerleitungen (350), die die beiden Datenspeicherlaufwerke (310, 320) und die Steuervorrichtung (330) miteinander verbinden und
eine erste Lese-/Schreibbefehlleitung (360), die eines der Datenspeicherlaufwerke (320) und die Steuervorrichtung (330) verbindet,
**gekennzeichnet durch**
eine zweite Lese-/Schreibbefehlleitung (370), die das andere Datenspeicherlaufwerk (310) und die Steuervorrichtung (330) verbindet.

2. Datenübertragungsschnittstelle nach Anspruch 1, wobei die Steuervorrichtung (330) eine direkte Datenübertragung zwischen den beiden miteinander verbundenen Datenspeicherlaufwerken (310, 320) steuert.

3. Datenübertragungsschnittstelle nach Anspruch 1, wobei die Steuervorrichtung (330) Daten von der Steuervorrichtung (330) zu beiden Datenspeicherlaufwerken (310, 320) überträgt, auf die sie gleichzeitig geschrieben werden sollen.

4. Datenübertragungsschnittstelle nach einem der Ansprüche 1 bis 3, wobei die Steuervorrichtung (330) die Datenübertragung steuert, indem sie gemeinsam Signale an die Datenleitungen (340) und die Steuerleitungen (350) zu den verbundenen Datenspeicheriaufwerken (310, 320) ausgibt, und jeweils einzelnen Lese-/Schreibsignale an die Lese-/Schreibbefehlleitungen (360, 370) zu den verbundenen Speicherlaufwerken (310, 320) ausgibt.

5. Datenübertragungsschnittstelle nach Anspruch 4, wobei die Steuervorrichtung (330) so ausgeführt ist, eine Datenübertragung durch sequenzielles Ausgegeben der Lesen-/Schreibsignale an die verbundenen Datenspeichedaufwerke (310, 320) zu steuern, um die Datenspeicherlaufwerke (310, 320) für eine Datenübertragung zu initialisieren, und gleichzeitig die Lese-/Schreibsignale an beide Datenspeicherlaufwerke (310, 320) auszugeben, um eine Datenübertragung durchzuführen.

6. Datenübertragungsschnittstelle nach Anspruch 5, wobei die Steuervorrichtung (330) die Datenübertragung durch sequenzielles Ausgeben eines Lese-/Schreibsteuersignals an die Lese-/Schreibbefehlleitungen (360, 370) initialisiert, um eines der verbundenen Datenspeicherlaufwerke (310, 320) auszuwählen, und einen bestimmten Datenspeicherbereich auf dem ausgewählten Datenspeicherlaufwerice (310, 320) für ein Lesen oder Schreiben der Daten festzusetzen.

7. Datenübertragungsschnittstelle nach einem der Ansprüche 4 bis 6, wobei die Steuervorrichtung (330) beide Datenspeicherlaufwerke (310, 320) anweist, die Daten direkt zu übertragen, in dem gleichzeitig ein Lesesteuersignal an die erste oder zweite Lese-/Schreibe-Anweisungsleitung (360, 370) und einen Schreibsteuersignal an die andere Lese-/Schreibe-Anweisungsleitung (360, 370) ausgegeben wird.

8. Datenübertragungsschnittstelle nach einem der Ansprüche 4 bis 6, wobei die Steuervorrichtung (330) beide Datenspeicheriaufwerke (310, 320) anweist Daten auf sie zu schreiben, in dem gleichzeitig einen Schreibsteuersignal an die erste und die zweite Lese-/Schreibe-Anweisungsleitung (360, 370) ausgegeben wird.

9. Datenübertragungsschnittstelle nach einem der Ansprüche 1 bis ist 8, wobei jede der Lese-/Schreibbefehlleitungen (360, 370) eine Lesebefehlleitung zur Ausgabe eines Lesebefehls und eine Schreibbefehlleitung zur Ausgabe eines Schreibbefehls enthält.

10. Datenübertragungsschnittstelle nach einem der Ansprüche 1 bis 9, wobei die Datenleitungen (340) 16 Leitungen enthalten.

11. Datenübertragungsschnittstelle nach einem der Ansprüche 1 bis 10, wobei die Datenleitungen (340), die Steuerleitungen (350) und die erste Lese-/Schreibe-Anweisungsleitung (360) gemäß des ATA/ATAPI-Standards konfiguriert sind.

12. Datenübertragungsschnittstelle gemäß einem der Ansprüche 1 bis 11, wobei die Datenspeicherlaufwerke (310, 320) optische Laufwerke, Festplatten, oder ein optisches Laufwerk und eine Festplatte sind.

13. Datenübertragungsschnittstelle gemäß einem der Ansprüche 2 bis 12, das femer eine Umschaltvorrichtung (390) umfasst, zum Trennen der Datenleitungen (340) von der Steuervorrichtung (330) während einer direkten Datenübertragung zwischen den beiden verbundenen Datenspeicherlaufwerken (310, 320).

14. Fahrzeuginformations- und/oder Unterhaltungssystem, das eine Datenübertragungsschnittstelle gemäß einem der Ansprüche 1 bis 13 enthält.

15. Fahrzeuginformations- und/oder Unterhaltungssystem, wobei Video-, Audio-, Navigations- oder andere Daten von einem ersten Datenspeicherlaufwerk (310, 320), das ein optische Laufwerk ist, an ein zweites Datenspeicherlaufwerk (310, 320), das eine Festplatte ist, übertragen werden.

16. Prozessierungssystem, das eine Datenübertragungsschnittstelle gemäß einem der Ansprüche 1 bis 13 enthält.

17. Computersystem, das einen Anschluss (335) zum Anschließen an eine Datenübertragungsschnittstelle enthält, der Anschluss (335) umfasst:
eine Mehrzahl von Datenleitungen (340),
eine Mehrzahl von Steuerleitungen (350) und
eine erste Lese-/Schreibbefehlleitung (370) zur Übertragung eines Lese-/Schreibbefehls an ein Speicherlaufwerk (310)
**gekennzeichnet durch**
eine zweite Lese-/Schreibbefehlleitung (360) zur Übertragung eines Lese-/Schreibbefehls an ein anderes Speicherlaufwerk (320).

18. Computersystem gemäß Anspruch 17, wobei jede der Lese-/Schreibbefehlleitungen eine Lesebefehlleitung für einen Lesebefehl und eine Schreibbefehlleitung für eine Schreibbefehl enthält.

19. Computersystem gemäß Anspruch 17 und 18, wobei die Datenleitungen 16 Leitungen enthalten.

20. Computersystem gemäß mit einem der Ansprüche 17 bis 19, wobei die Datenleitungen, die Steuerleitungen und die erste Lese-/Schreibbefehlleitung gemäß des ATA/ATAPI-Standards konfiguriert sind.

21. Verfahren zur Verbindung von zwei Datenspeicherlaufwerken (310,23) und einer Steuervorrichtung (330), wobei das Verfahren die Schritte umfasst:
Initialisieren (710, 720) der beiden verbundenen Datenspeicherlaufwerke (310, 320) durch die Steuervorrichtung (330), zur Vorbereitung einer Verarbeitung zum Lesen und/oder Schreiben von Daten durch sequenzielles Auswählen eines der beiden verbundenen Datenspeicherlaufwerke (310,320) und Festlegen der entsprechenden Datenspeicherbereiche hierauf und
Übertragung von Daten nach/von den Datenspeicherlaufwerken (310, 320) gemäß der festgelegten Datenspeicherbereichs durch gleichzeitiges Anweisen (730) beider Datenspeicherlaufwerke (310,320) durch einzelne Lese-/Schreibbefehle.

22. Verfahren gemäß Anspruch 21, wobei beide Datenspeicherlaufwerke (310, 320) durch die Steuervorrichtung (330) zur Steuerung der Datenübertragung durch eine Mehrzahl von Datenleitungen (340) und eine Mehrzahl von Steuerleitungen (350) miteinander verbunden sind, und die beiden Datenspeicheriaufwerke (310, 320) jeweils einzeln mit der Steuervorrichtung (330) durch entsprechende Lese-/Schreibbefehlleitungen verbunden sind.

23. Verfahren gemäß Anspruch 22, wobei jede der Lese-/Schreibbefehlleitungen (360, 370) eine Lesebefehlleitung zur Ausgabe eines Lesebefehls und eine Schreibbefehlleitung zur Ausgabe eines Schreibbefehls enthält.

24. Verfahren gemäß einem der Ansprüche 21 bis 23, wobei die Daten direkt von einem der Datenspeicherlaufwerke (310, 320) zu den anderen Datenspeicherlaufwerk (310, 320) übertragen werden, in dem gleichzeitig eines der Datenspeicherlaufwerke (310, 320) angewiesen wird Daten von dem festgelegten Datenspeicherbereich zu lesen und in dem das andere Datenspeicherlaufwerk (310, 320) angewiesen (730) wird, Daten in dem festgelegten Datenspeicherbereich zu schreiben.

25. Verfahren gemäß Anspruch 24, das femer den Schritt umfasst die Datenleitungen (340) von der Steuervorrichtung (330) zu trennen, wenn Daten direkt zwischen den beiden verbundenen Datenspeicherlaufwerken (310, 320) übertragen werden.

26. Verfahren gemäß einem der Ansprüche 21 bis 23, wobei Daten gleichzeitig an beide der Datenspeicherlaufwerke (310, 320) übertragen werden, in dem beide Datenspeicherlaufwerke (310, 320) angewiesen (730) werden, Daten in die jeweils festgelegten Datenspeicherbereiche zu schreiben.

27. Verfahren gemäß einem der Ansprüche 21 bis 26, wobei die Steuerleitungen (360, 370) drei Adressleitungen zur Auswahl eines einer Mehrzahl von Registem (412-426) eines verbundenen Datenspeicherlaufwerken (310, 320) enthalten.

28. Verfahren gemäß einem der Ansprüche 21 bis 27, wobei das Verfahren in Übereinstimmung mit dem ATA/ATAPI-Standard ist.

## Revendications

1. Interface de transfert de données pour interconnecter deux lecteurs de stockage de données (310, 320) et un dispositif de commande (330), comprenant :
une pluralité de lignes de données (340) connectant conjointement les deux lecteurs de stockage de données (310, 320) et ledit dispositif de commande (330),
une pluralité de lignes de commande de données (350) connectant conjointement les deux lecteurs de stockage de données (310, 320) et ledit dispositif de commande (330), et
une première ligne de commande de lecture/écriture (360) connectant un desdits lecteurs de stockage de données (320) et dudit dispositif de commande (330)
**caractérisée par**
une seconde ligne de commande (370) de lecture/écriture connectant l'autre desdits lecteurs de stockage (310) et dudit dispositif de commande (330).

2. Interface de transfert de données selon la revendication 1, dans laquelle ledit dispositif de commande (330) contrôle un transfert direct des données entre les deux lecteurs de stockage de données interconnectés (310, 320).

3. Interface de transfert de données selon la revendication 1, dans laquelle ledit dispositif de commande (330) transfert des données dudit dispositif de commande (330) aux deux lecteurs de stockage de données (310, 330), pour les écrire simultanément dessus.

4. Interface de transfert de données selon l'une quelconque des revendications 1 à 3, dans laquelle ledit dispositif de commande (330) contrôle le transfert de données en produisant conjointement des signaux sur lesdites lignes de données (340) et lesdites lignes de commande (350) vers lesdits lecteurs de stockage de données connectés (310, 320) et en produisant séparément des signaux de lecture/écriture sur lesdites lignes de commande (360, 370) vers lesdits lecteurs de stockage connecté (310, 320).

5. Interface de transfert de données selon la revendication 4, dans laquelle ledit dispositif de commande (330) est adapté pour contrôler le transfert de données par la production séquentielle desdits signaux de lecture/écriture vers lesdits lecteurs de stockage de données connectés (310, 320) pour initialiser les lecteurs de stockage de données (310, 320) pour un transfert des données, et par la production simultanée desdits signaux de lecture/écriture vers les deux lecteurs de stockage de données (310, 320) pour accomplir un transfert de données.

6. Interface de transfert de données selon la revendication 5, dans laquelle ledit dispositif de commande (330) initialise le transfert de données par la production séquentielle de signaux de commande de lecture/écriture sur lesdites lignes de commande de lecture/écriture (360, 370) pour sélectionner un desdits lecteurs de stockage de données connectés (310, 320) pour attribuer une certaine zone de stockage de données audit lecteur de stockage de données sélectionné (310, 320) pour une lecture ou une écriture de données.

7. Interface de transfert de données selon l'une quelconque des revendications 4 à 6, dans laquelle ledit dispositif de commande (330), donne instruction aux deux lecteurs de stockage de données (310, 320) de transférer directement les données par production simultanée d'un signal de contrôle de lecture sur ladite première ou ladite seconde ligne de commande de lecture/écriture (360, 370) et d'un signal de contrôle d'écriture sur l'autre ligne de commande de lecture/écriture (360, 370).

8. Interface de transfert de données selon l'une quelconque des revendications 4 à 6, dans laquelle ledit dispositif de commande (330) donne instruction aux deux lecteurs de stockage (310, 320) d'écrire des données en produisant simultanément un signal de commande d'écriture sur ladite première et ladite seconde lignes de commande de lecture/écriture (360, 370).

9. Interface de transfert de données selon l'une quelconque des revendications 1 à 8, dans laquelle chacune desdites lignes de commande de lecture/écriture (360, 370) inclut une ligne de commande de lecture pour produire une commande de lecture et une ligne de commande d'écriture pour produire une commande d'écriture.

10. Interface de transfert de données selon l'une quelconque des revendications 1 à 9, dans laquelle lesdites lignes de données (340) comportent 16 lignes.

11. Interface de transfert de données selon l'une quelconque des revendications 1 à 10, dans laquelle lesdites lignes de données (340), lesdites lignes de commande (350) et ladite première ligne de commande de lecture/écriture (360) sont configurées selon le standard ATA/ATAPI.

12. Interface de transfert de données selon l'une quelconque des revendications 1 à 11, dans laquelle lesdits lecteurs de stockage de données (310, 320) sont des unités de disque optique, des lecteurs de disque dur ou une unité de disque optique et un lecteur de disque dur.

13. Interface de transfert de données selon l'une quelconque des revendications 2 à 12, comprenant en outre des moyens de commutation (390) pour déconnecter les lignes de données (340) du dispositif de commande (330) pendant le transfert direct de données entre les deux lecteurs de stockage de données connectées (310, 320).

14. Système d'information et/ou de loisir pour véhicule comportant une interface de transfert de données selon l'une quelconque des revendications 1 à 13.

15. Système d'information et/ou de loisir pour véhicule selon la revendication 14, dans lequel des données vidéo, audio, de navigation ou d'autres données sont transférées d'un premier lecteur de stockage de données (310, 320) qui est un lecteur de disque optique à un second lecteur de stockage de données (310, 320) qui est un lecteur de disque dur.

16. Dispositif de traitement comportant une interface de transfert de données selon l'une quelconque des revendications 1 à 13.

17. Système informatique comportant un connecteur (335) connectable à une interface de transfert de données, ledit connecteur (335) comprenant :
une pluralité de lignes de données (340),
une pluralité de lignes de commande de données (350), et
une première ligne de commande de lecture/écriture (370) pour la transmission d'une commande de lecture/écriture à un lecteur de stockage (310)
**caractérisé par**
une seconde ligne de commande de lecture/écriture (360) pour la transmission d'une commande de lecture/écriture à un autre lecteur de stockage (320).

18. Système informatique selon la revendication 17, dans lequel chacune desdites lignes de commande de lecture/écriture comprend une ligne de commande de lecture pour une commande de lecture et une ligne de commande d'écriture pour une commande d'écriture.

19. Système informatique selon la revendication 17 ou 18, dans lequel lesdites lignes de données comprennent 16 lignes.

20. Système informatique selon l'une quelconque des revendications 17 à 19, dans lequel lesdites lignes de données, lesdites lignes de commande et ladite première ligne de commande de lecture/écriture sont configurées selon le standard ATA/ATAPI.

21. Méthode pour connecter deux lecteurs de stockage de données (310, 320) et un dispositif de commande (330), ladite méthode comprenant les étapes de :
initialiser (710, 720) les deux lecteurs de stockage de données (310, 320) par ledit dispositif de commande (330) pour préparer une procédure de lecture et/ou d'écriture de données, par sélection séquentielle d'un des deux lecteurs de stockage de données connectés (310, 320) et affecter respectivement des zones de stockage de données sur ceux-ci, et
transférer des données vers/depuis lesdits lecteurs de stockage de données (310, 320) conformément aux zones de stockage de données affectées par instruction simultanée (730) des deux lecteurs de stockage de données (310, 320) par des commandes d'écriture/lecture individuelles.

22. Méthode selon la revendication 21, dans laquelle les deux lecteurs de stockage de données (310, 320) sont connectés conjointement audit dispositif de commande (330) pour commander le transfert desdites données par une pluralité de lignes de données (340) et une pluralité de lignes de commande (350) et les deux lecteurs de stockage de données (310, 320) sont connectés séparément audit dispositif de commande (330) par une ligne de commande de lecture/écriture respective (360, 370).

23. Méthode selon la revendication 22, dans laquelle chacune desdites lignes de commande de lecture/écriture (360, 370) comporte une ligne de commande de lecture pour produire une commande de lecture et une ligne de commande d'écriture pour produire une commande d'écriture.

24. Méthode selon l'une quelconque des revendications 21 à 23, dans laquelle les données sont directement transférées d'un desdits lecteurs de stockage de données (310, 320) à l'autre lecteur de stockage de données (310, 320) par instruction simultanée (730) donnée à un des lecteurs de stockage de données (310, 320) de lire des données de la zone de stockage de données affectée et par instruction (730) donnée à l'autre lecteur de stockage de données (310, 320) d'écrire des données sur la zone de stockage de données affectée.

25. Méthode selon la revendication 24, comportant en outre l'étape de déconnecter des lignes de données (340) du dispositif de commande (330) pendant le transfert direct des données entre les deux lecteurs de stockage de données (310, 320).

26. Méthode selon l'une quelconque des revendications 21 à 23, dans laquelle des données sont simultanément transférées auxdits deux lecteurs de stockage de données (310, 320) par instruction simultanément (730) aux deux lecteurs de stockage de données (310, 320) d'inscrire des données sur les zones de stockage de données respectivement affectées.

27. Méthode selon l'une quelconque des revendications 21 à 26, dans laquelle lesdites lignes de commande (360, 370) comprennent 3 lignes d'adresses pour sélectionner l'un parmi une pluralité de registres (412-426) dans un lecteur de stockage de données connecté (310, 320).

28. Méthode selon l'une quelconque des revendications 21 à 27, ladite méthode étant conforme audit standard ATA/ATAPI.
